# NEW EUROPEAN PATENT SPECIFICATION

(11) **EP 1 177 252 B2**
(45) Date of publication and mention of the opposition decision: **14.09.2011**
(45) Mention of the grant of the patent: 15.06.2005
(21) Application number: 00925503.5
(22) Date of filing: 28.04.2000
(51) Int. Cl.: C08K 3/34, C08K 9/04

(54) **FIRE RETARDANT COMPOSITIONS**
FLAMMHEMMENDE ZUSAMMENSETZUNGEN
COMPOSITIONS IGNIFUGES

(30) Priority: 30.04.1999 EP 99303444
(43) Date of publication of application: 06.02.2002
(73) Proprietor: Rockwood Clay Additives GmbH, 85368 Moosburg (DE)
(72) Inventor: BROWN, Stephen Clifford, Bicester, Oxfordshire OX6 9FA (GB); BASTIMENT, Marie-Laure, F-78320 Le Mesnil Saint Denis (FR); EVANS, Kenneth Arthur, Westward View, Buckinghamshire SL9 0DX (GB); GARCIA, Javier Prieto, Oxfordshire OX16 2EQ (GB)
(74) Representative: Westendorp, Michael Oliver
(86) International application number: PCT/GB2000/001652
(87) International publication number: WO 2000/066657

(56) References cited:
- EP-A- 0 459 472
- EP-A2- 0 239 986
- WO-A-97/30950
- JP-A- 9 095 630
- US-A- 4 708 975

## Description

This invention relates to fire retardant or flame retardant (these terms being synonymous for present purposes) additives for polymeric materials. More particularly, it relates to such additive compositions which have the effect of increasing the strength of the char formed when plastics burn.

The combustion of a polymer leads to the formation of a carbonaceous residue, ash or char. Many fire tests, such as the single burning item (SBI), UL94 and 3m-cube test (IEC1034 - also mentioned in other standards, for example BS 6724:1990 appendix F), have shown the importance of the physical properties of this char in controlling the flammability of plastics. Foamy char structure appears to be more fire resistant than brittle, thin char. Additives that increase the amount of char formation are known to be effective fire retardants. Fire-retardant additives for Polymeric Materials - I. Char Formation from Silica Get-Potassium Carbonate, J W Gilman et al , Fire and Materials, Vol 21, 23-32 (1997) contains a review of char formation in various plastics and reports on the effect that silica gel and potassium carbonate additives have on polymer flammability.

When a plastic cable burns, the slumping or dripping of flaming polymer promotes the progression of the fire. The formation of a stable char layer after combustion of a section of the cable may protect the underlying part of the cable structure as it creates a barrier to further ignition. Furthermore, the formation of a char layer is believed to be responsible for the reduction in the rate of heat release sometimes observed in the Cone Calorimeter. Additives which have the effect of increasing the strength of the char formed when a plastic coated cable burns are therefore extremely valuable.

Nano-composites, made by mixing two or more phases such as particles, layers or fibres, where at least one of the phases is in the nanometre size range, are well known. Nano-clays and nano-composite clays are also known.

WO 97/30950 describes the manufacture of one type of such clays from smectite, in particular montmorillonite, and its use in thermoplastics. A family of such nano-clays is sold under the trade mark Cloisite. These are the reaction product of a smectite-type clay and a mixture of a quaternary ammonium compound and a chain transfer agent. The table below gives the organic modifiers that are used for the different grades of Cloisite. The clays are said to be useful as additives or fillers for polymers. Each grade is adapted to use in a particular type of polymer. The resulting polymer composites can be moulded into articles by conventional shaping processes, such as injection moulding and extruding, so as to form for example components for the electrical and electronics industries. Among the properties noted for the polymer composites are improved ignition resistance and non-drip characteristics.

| | **Organic Modifier (1)** | **Modifier Concentration** | **% Moisture** | **% Weight Loss on Ignition** |
|---|---|---|---|---|
| Cloisite® 6A | 2M2HT | 140 meq/100g | 2% | 47% |
| Cloisite® 15A | 2M2HT | 125 meq/100g | 2% | 43% |
| Cloisite® 20A | 2M2HT | 95 meq/100g | 2% | 38% |
| Cloisite® 10A | 2MBHT | 125 meq/100g | 2% | 39% |
| Cloisite® 25A | 2MHTL8 | 95 meq/100g | 2% | 34% |
| Cloisite® 30A | MT2EtOH | 95 meq/100g | 2% | 32% |
| Cloisite® Na⁺ | (natural sodium montmorillonite) | | 4% | 7% |

| | | | | |
|---|---|---|---|---|
| (1 ) 2M2HT: dimethyl dihydrogenated tallow ammonium 2MBHT: dimethyl benzyl hydrogenated tallow ammonium 2MHTL8: dimethyl hydrogenated tallow 2-ethylhexyl ammonium MT2EtOH: methyl tallow bis-2hydroxy ethyl ammonium | | | | |

Nanocomposites: Radiative Gasification and Vinyl Polymer Flammability, J W Gilman et al , International Wire and Cable Symposium Proceedings 1997, 761-774 contains a report that nylon-6 clay-nano-composites have improved char characteristics compared to pure nylon-6. There is also teaching to add clays to other polymers such as polystyrene and polypropylene-based polymers.

Fire Retardant Polyetherimide Nanocomposites, Jongdoo Lee et al ,Mat. Res. Soc. Symp. Proc. Vol. 457, 1997 Materials Research Society, 513-518 reports the improved char formation brought about by the addition of nano-composites to plastics.

US Patent No 5,342,874 describes halogenated polymer formulations having flame retardant properties. They contain a synergistic flame retardant combination consisting of an aluminium or magnesium hydroxide and a tetravalent tin compound.

EP 0 459 472 A1 discloses a polyimide composite material which comprises a polyimide-containing resin and a layered clay mineral which is intercalated with organic onium ions and dispersed in said polyimide. The composite material may be further incorporated with pigments and dyes, reinforcements and fillers, heat stabilizers, antioxidants, UV light absorbers, light stabilizers, lubricants, plasticizers, antistatic agents and flame retardants according to the intended use.

WO 97/30950 discloses improved organoclay compositions which comprise the reaction product of a smectite-type clay having an ion exchange capacity of at least 50 meq. wt. per 100 g clay (active basis), and mixture of a quaternary ammonium compound and a chain transfer agent which is a thiol, α-methylketone, α-methylalcohol or a halogen compound.

EP-A-1 022 314 A1, which is prior art in accordance with Article 54(3) and (4) EPC, discloses a polyamide resin composition comprising, inter alia, a melt blend of a polyamide resin, a phyllosilicate, and an olefin compound having a carboxylic acid anhydride group in the molecule or a polymer of the olefin compound.

With the use of polymeric materials still on the increase, there is a need for improved fire retardant additives. The present invention is based on the finding that a combination of two or more previously known fire retardant additives gives a surprisingly strong effect.

According to this invention there is provided a polymer composition comprising a polymer and a synergistic flame retardant additive combination which comprises a nano-clay and a second filler, wherein, during combustion of the composition, a coherent char is formed in accordance with claim 1.

A coherent char is a char which holds together and would not fall off an underside surface when that surface is positioned substantially horizontally.

It has been found that the presence of this flame retardant additive combination in polymers greatly increases the strength of the char that forms during combustion. As explained above, the formation of a strong char creates a barrier to ignition of the underlying material. The compositions of this invention are flame retardant at least in part because a strong char is formed.

The polymer composition of this invention contains a nano-clay which is the reaction product of a smectite-type clay and a mixture of a quaternary ammonium compound and a chain transfer agent. Cloisite nano-clays (manufactured by Southern Clay Products, Inc) are particularly preferred.

With regard to the second filler, this comprises at least one of aluminium trihydroxide (ATH), magnesium carbonate, magnesium hydroxide (or the ore brucite), hydromagnesite, huntite, boehmite and bauxite. ATH is particularly preferred. An inert filler is one that does not have a flame retardant effect when used alone in a polymer. Other known inert fillers or flame retardant fillers can be used instead of or in addition to those listed above and still produce a synergistic effect : borates (e.g., zinc borates) and molybdates (e.g., ammonium molybdates) particularly in combination with ATH and the nanoclay. It is to be understood that these fillers may be added to the nano-clay containing composition either individually or in combinations of two or more.

The particle size of the second filler is preferably less than 10µm, more preferably less than 5µm, most preferably less than 2µm. The second filler may have a surface area which is greater than 1m²/g, preferably not greater than 35m²/g.

The proportion of the nano-clay component to the other filler component in the compositions of this invention is typically from 90% : 10% to 10% : 90% by weight. The proportion of nano-clay is preferably between 1 and 20% by weight of the total filler content. The total filler content (i.e. nano-clay plus the other filler) is from 20% to 80%, preferably from 40% to 70% by weight. The compositions may also include further constituents which are routinely present in conventional fire retardant products, such as stabilisers.

The fire retardant additive combinations which characterise this invention are suitable for polymers as defined in claim 1. The particularly preferred use of the compositions of this invention is in cables for electrical or optical transmission. The compositions may, for example, also be used to coat other moulded or extruded materials. The coating may be, for example, a sheath, jacket or insulation.

According to a further aspect of the present invention, there is provided the use of the polymer composition as a char promoter.

There is also provided a moulded or extruded material coated with the polymer composition.

According to a further aspect of the present invention, there is provided a method of improving the char promoting properties of a polymer composition, which method comprises the steps of combining a polymer and a synergistic flame retardant additive combination which comprises a nano-clay and a second filler in accordance with claim 8.

The compositions of this invention result from the finding that adding a nano-clay, such as Cloisite, and a second filter, such as ATH, to plastics surprisingly and significantly increases the strength of the char that forms during combustion. The reason for this synergistic effect is not known. It is possible that the ATH or other filler aids mixing of the clay and the polymer, or perhaps there is some chemical or physical effect that occurs during burning, or perhaps the fillers mechanically reinforce the char, or the filler acts as a support for the nanoclay, but the applicant is not restricted to these explanations.

The synergistic effect is illustrated in the following example. Of the three sample formulations tested (namely: one with ATH alone, one with nano-clay alone and one with both of these additives), only the sample of the composition according to this invention was able to pass the char test.

The invention will now be described, by way of illustration, with reference to the following examples and in which:
Figures 1 and 2 show silica mapping of Example 1; and
Figures 3 to 6 show char test results for Example 2.

### EXAMPLE 1

### Formulations:

The following three formulations were prepared according to the procedure described below.

EVA45 is based on 65% ATH, EVA46 on 5% nano-clay, and EVA47 on 60% ATH plus 5% nano-clay. All percentages are by weight.

| **Ingredients** | **EVA045-99** | **EVA046-99** | **EVA047-99** |
|---|---|---|---|
| Escorene Ultra 00119 (EVA) | 100 | 100 | 100 |
| SF7E (ATH) | 185 | - | 170 |
| Cloisite 30A | - | 5.3 | 15 |
| Aminosilane 1100 (coating for ATH) | 1.85 | - | 1.7 |
| lrganox 10-10 (stabiliser) | 0.5 | 0.5 | 0.5 |

The figures quoted in the table are "phr", i.e. parts by weight per hundred parts of polymer. In the table, the compositions are given in parts by weight.

### Procedure:

### Mixing

EVA45 and EVA47 were produced on a Banbury BR1600 (batch mixer) according to the following procedure. The ingredients were added in the following order:
1^{st} addition: Escorene + half of the filler.
2^{nd} addition: half of the filler + silane + stabiliser (+ nano-clay for EVA47).

They were mixed until the ingredients were adequately dispersed.

A different recipe was used to mix EVA46. Namely, the three ingredients were placed together and mixed until an adequate dispersion was obtained.

The batches from the Banbury mixer were then calendered on the two roll mill at approximately 95°C to form a hide. 3mm thick by 15cm square plaques were compression moulded at 150°C from the hide and 5cm square samples were cut out from the plaques and tested according to the char test procedure (described below).

A plaque of each of the compounds EVA46 and EVA47 was frozen using liquid nitrogen, and broken into 2 pieces. The fractured surface was then analysed using EDS mapping. Aluminium and silicon enriched areas were mapped to determine whether the nano-clay was well dispersed.

### Char Test Procedure

The samples to be subjected to the test are in the form of panels measuring 5 cm² and 3 mm in thickness. They are held vertically by means of a U-shaped frame. A load cell incorporated in the frame is connected to a chart recorder.

Once the apparatus has been set up, a fish tail flame is applied to the bottom edge of the panel. The flame impinges along the whole length of the bottom edge of the panel in the frame. It is allowed to burn and the mass of the panel diminishes. The chart recorder plots mass loss against time.

The test continues until either there is no more mass loss or there is a sudden mass loss. If the sample under test has formed a strong char which is staying in place (this is an example of a coherent char), the mass loss curve will by asymptotic to time. At the end of the test, the sample either falls out of the frame or stays in the frame. In the latter case, the sample panel can be tapped and if it still remains in the frame then a strong char has been formed during its combustion.

The tapping test was carried out on samples subjected to the char test that did not show substantial sudden weight loss during the test. Although subjective, it provides a good indication of how coherent the char is. The test is performed by tapping the char with a metal spatula. Char that disintegrates or falls off easily is rated 1 or 2. Char requiring a harder tap to cause it to break off was rated 3 or 4 and deemed to have passed the test. The most coherent char that survived tapping was rated 5.

### Results:

Both EVA45 and EVA46 failed the test and fell from the sample holder in about one minute. EVA47 stayed on the sample holder for the whole duration of the test. It gave a total mass loss of 49% and a strong char.

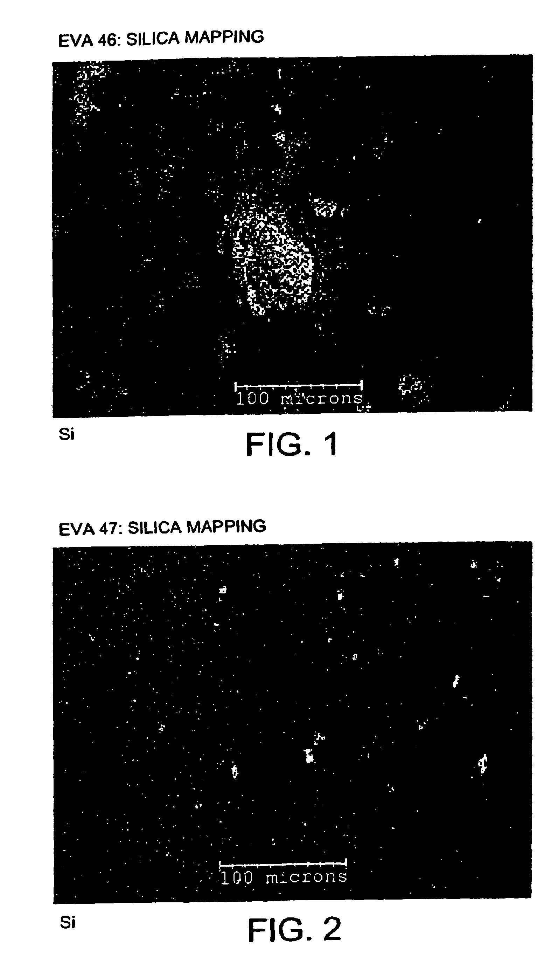

The nano-clay is mainly constituted of silica. Therefore, silica was mapped on both EVA46 and EVA47. The results are shown in Figures 1 and 2 (the silicon clusters, representing clay, appear as white dots). EVA46 showed large agglomerates of clay (up to 100 µm). Clay particles up to 10 µm were still visible in EVA47.

Neither ATH nor nano-clay gave a strong enough char when used on their own at the conventionally recommended addition levels. The results demonstrate that the only way to obtain a strong char is to use both together.

Very coarse agglomerates of clay were observed in EVA46. Agglomerates were still visible in EVA47 but were much smaller. The ATH seems to have helped the dispersion or mixing of the clay. This could explain the results obtained during the char test. However, it is not clear if this is the only explanation for the strength of the char.

### EXAMPLE 2

### Formulations:

The following formulations were prepared according to the procedure described below.

EVA119 and EVA121 are based on 65% filler, EVA120 and EVA122 60% filler plus 5% nano-clay. All percentages are by weight.

| **Ingredients** | **EVA119** | **EVA120** | **EVA121** | **EVA122** |
|---|---|---|---|---|
| Escorene Ultra 00119 | 100 | 100 | 100 | 100 |
| Polcarb | 185 | 170 | - | - |
| Ultracarb 5 | - | - | 185 | 170 |
| Cloisite 30A | - | 15 | - | 15 |
| lrganox 10-10 | 0.5 | 0.5 | 0.5 | 0.5 |

In the table, the compositions are given in parts by weight.

Polcarb is a 1-micron CaCO₃ with a surface area of 7m²/g sold by ECC.

Ultracarb 5 is a mix of huntite (Mg₃Ca(CO₃)₄) and hydromagnesite

(Mg₄(CO₃)₃(OH)₂3H₂O), with a d₅₀ lower than 1 micron and a surface area of 15m²/g, that is sold by Microfine Minerals.

Cloisite 30A is a nanoclay sold by South Clay Products and which has been treated using a surface modifier specially chosen for EVA polymers.

### Procedure:

EVA119, 120, 121 and 122 were produced on the Banbury BR1600 according to the following procedure:
1^{st} addition: Escorene + half of the filler (+ nanoclay for EVA120 and EVA122) then mix.
2^{nd} addition: half of the filler + stabiliser then mix and afterwards cool for 2 minutes at 10RPM.

5cm square samples were prepared and tested in the char test as described in Example 1.

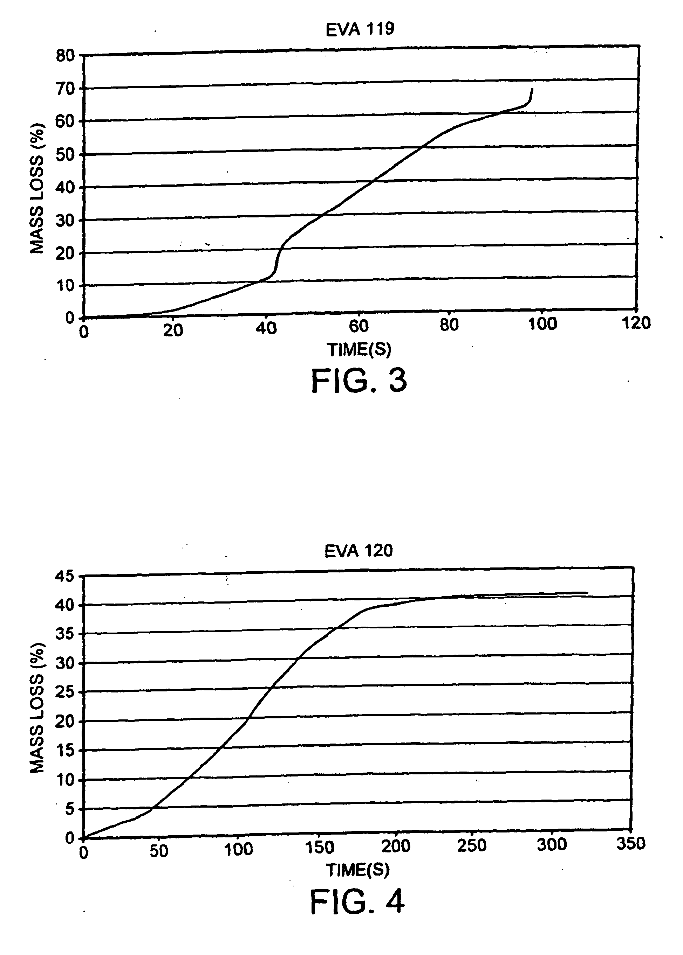

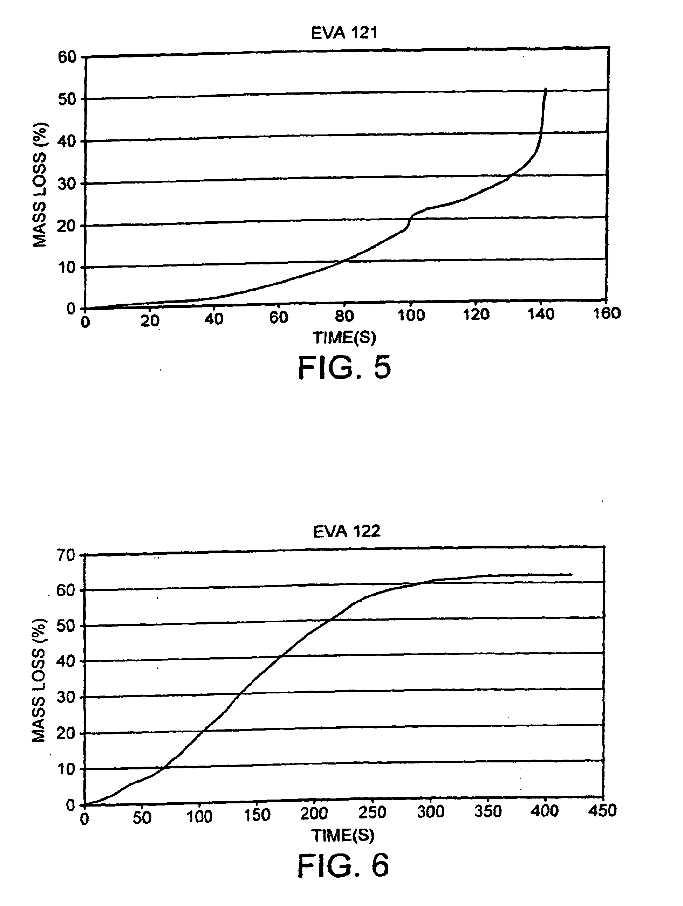

### Results (see Figure 3 to 6):

### Char test/LOI

Both EVA119 and EVA121 failed the char test in one to two minutes. EVA120 and EVA122 passed the test. They gave a char strength respectively 3 and 4.

| | **EVA119** | **EVA120** | **EVA121** | **EVA122** |
|---|---|---|---|---|
| Max Total Mass Loss by Char Test | - | 40.5% | - | 62% |

It can be seen that both fillers alone failed the char test, but passed in the presence of the nanoclay. The filler alone does not give any char. The clay alone is dragged down from the sample support by the melting polymer before acting as a char promoter.

## Claims

1. A polymer composition comprising:
a polymer, wherein the Polymer is selected from the group consisting or polyethylene, ethylene copolymer, polypropylene, propylene copolymer and combinations thereof; and a synergistic flame retardant additive combination which comprises a nanoclay, wherein the nano-clay is the reaction product of a smectite-type clay and a mixture of a quaternary ammonium compound and a chain transfer agent; and a second filler, wherein, during combustion of the composition, a coherent char is formed; and wherein the second filler comprises at least one of aluminium trihydroxide, magnesium carbonate, magnesium hydroxide (or the ore brucite) hydromagnesite, huntite, boehmite, and bauxite.

2. A polymer composition as claimed in claim 1, wherein the proportion of the nano-clay to the second filler is from 90% : 10% to 10% : 90% by weight.

3. A polymer composition as claimed in claim 1 or 2, wherein the total filler content is from 20% to 80% by weight.

4. A cable or wire coating formed from a polymer composition according to any one of claims 1 to 3.

5. A moulded or extruded material coated with a polymer composition according to any one of claims 1 to 4.

6. Use of a polymer composition according to any one of claims 1 to 5 as a char promoter.

7. Use of a synergistic flame retardant additive combination which comprises a nano-clay, wherein the nano-clay is the reaction product of a smectite-type clay and a mixture of a quaternary ammonium compound and a chain transfer agent; and a second filler in a polymer composition, wherein the polymer is selected from the group consisting of polyethylene, ethylene copolymer, polypropylene, propylene copolymer and combinations thereof; and wherein the second filler comprises at least one of aluminium trihydroxide, magnesium carbonate, magnesium hydroxide (or the ore brucite) hydromagnesite, huntite, boehmite, and bauxite for promoting the formation of a coherent char.

8. A method of improving the char promoting properties of a polymer composition, which method comprises the steps of combining a polymer and a synergistic flame retardant additive combination which comprises a nano-clay, wherein the nano-clay is the reaction product of a smectite-type clay and a mixture of a quaternary ammonium compound and a chain transfer agent; and a second filler; wherein the polymer is selected from the group consisting of polyethylene, ethylene copolymer, polypropylene, propylene copolymer and combinations thereof; and wherein the second filler comprises at least one of aluminium trihydroxide, magnesium carbonate, magnesium hydroxide (for the ore brucite) hydromagnesite, huntite, boehmite, and bauxite.

## Patentansprüche

1. Polymerzusammensetzung, enthaltend:
ein Polymer, wobei das Polymer ausgewählt ist aus der Gruppe bestehend aus Polyethylen, Ethylen-Copolymer, Polypropylen, Propylen-Copolymer und Kombinationen davon; und eine synergistische flammhemmende Additivkombination, enthaltend einen Nanoclay, wobei der Nanoclay das Reaktionsprodukt eines Tones vom Smektit-Typ und eines Gemisches aus einer quaternären Ammoniumverbindung und eines Kettenübertragungsagens (chain transfer agent) ist; und einen zweiten Füllstoff, worin während der Verbrennung der Zusammensetzung eine kohärente Kohle (Kohlenstoffkruste) gebildet wird; und
worin der zweite Füllstoff mindestens eine [Verbindung] ausgewählt aus Aluminiumtrihydroxid, Magnesiumcarbonat, Magnesiumhydroxid (oder das Erz Brucit), Hydromagnesit, Huntit, Boehmit und Bauxit enthält.

2. Polymerzusammensetzung gemäß Anspruch 1, worin das Verhältnis des Nanoclays zu dem zweiten Füllstoff zwischen 90 Gew.-% : 10 Gew.-% und 10 Gew.-% : 90 Gew.-% liegt.

3. Polymerzusammensetzung nach einem der Ansprüche 1 oder 2, worin der Gesamtgehalt an Füllstoff bei 20 bis 80 Gew.-% liegt.

4. Kabel- oder Drahtbeschichtung, gebildet aus einer Polymerzusammensetzung nach einem der Ansprüche 1 bis 3.

5. Geformtes oder extrudiertes Material, beschichtet mit einer Polymerzusammensetzung nach einem der Ansprüche 1 bis 4.

6. Verwendung einer Polymerzusammensetzung nach einem der Ansprüche 1 bis 5 als Verkohlungsförderer (Kohlenstoffkrustenförderer).

7. Verwendung einer synergistischen flammhemmenden Additivkombination, enthaltend einen Nanoclay, wobei der Nanoclay das Reaktionsprodukt eines Tones vom Smektit-Typ und eines Gemisches aus einer quaternären Ammoniumverbindung und eines Kettenübertragungsagens (chain transfer agent) ist; und einen zweiten Füllstoff in einer Polymerzusammensetzung, wobei das Polymer ausgewählt ist aus der Gruppe bestehend aus Polyethylen, Ethylen-Copolymer, Polypropylen, Propylen-Copolymer und Kombinationen davon; und worin der zweite Füllstoff mindestens eine [Verbindung] ausgewählt aus Aluminiumtrihydroxid, Magnesiumcarbonat, Magnesiumhydroxid (oder das Erz Brucit), Hydromagnesit, Huntit, Boehmit und Bauxit enthält, zur Förderung der Ausbildung einer kohärenten Kohle (Kohlenstoffkruste).

8. Verfahren zur Verbesserung der verkohlungsfördernden (kohlenstoffkrustenfördernden) Eigenschaften einer Polymerzusammensetzung, umfassend die Schritte: Zusammenbringen eines Polymers und einer synergistischen flammhemmenden Additivkombination, enthaltend einen Nanoclay, wobei der Nanoclay das Reaktionsprodukt eines Tones vom Smektit-Typ und eines Gemisches aus einer quaternären Ammoniumverbindung und eines Kettenübertragungsagens (chain transfer agent) ist; und einen zweiten Füllstoff, wobei das Polymer ausgewählt ist aus der Gruppe bestehend aus Polyethylen, Ethylen-Copolymer, Polypropylen, Propylen-Copolymer und Kombinationen davon; und,
worin der zweite Füllstoff mindestens eine [Verbindung] ausgewählt aus Aluminiumtrihydroxid, Magnesiumcarbonat, Magnesiumhydroxid (oder das Erz Brucit), Hydromagnesit, Huntit, Boehmit und Bauxit enthält.

## Revendications

1. Composition polymère comprenant:
un polymère, le polymère étant choisi dans le groupe consistant en polyéthylène, copolymère d'éthylène, polypropylène, copolymère de propylène, et leurs combinaisons;
et une combinaison synergique d'additifs ignifuges qui comprend une nano-argile, la nano-argile étant le produit de réaction d'une argile de type smectite et d'un mélange d'un composé d'ammonium quaternaire et d'un agent de transfert de chaîne; et une seconde charge, dans laquelle, durant la combustion de la composition, un résidu charbonneux cohérent est forme; et dans laquelle la seconde charge comprend au moins l'un parmi le trihydroxyde d'aluminium, le carbonate de magnésium, l'hydroxyde de magnésium (ou le minerai brucite), l'hydromagnésite, la huntite, la boehmite et la bauxite.

2. Composition de polymère selon la revendication 1, dans laquelle la proportion de la nano-argile par rapport à la seconde charge est de 90 %: 10 % à 10 %:90 % en poids.

3. Composition de polymère selon l'une quelconque des revendications 1 ou 2, dans laquelle la teneur totale en charges est de 20 % à 80 % en poids.

4. Revêtement de câble ou de fil métallique formé d'une composition polymère selon l'une quelconque des revendications 1 à 3.

5. Matériau moulé ou extrudé revêtu d'une composition polymère selon l'une quelconque des revendications 1 à 4.

6. Utilisation d'une composition de polymère selon l'une quelconque des revendications 1 à 5 en tant que promoteur de résidu charbonneux.

7. Utilisation d'une combinaison synergique d'additifs ignifuges qui comprend une nano-argile, la nano-argile étant le produit de réaction d'une argile de type smectite et d'un mélange d'un composé d'ammonium quaternaire et d'un agent de transfert de chaîne; et une seconde charge dans une composition polymère, le polymère étant choisi dans le groupe consistant en polyéthylène, copolymère d'éthylène, polypropylène, copolymère de propylène, et leurs combinaisons; et dans laquelle la seconde charge comprend au moins l'un parmi le trihydroxyde d'aluminium, le carbonate de magnésium, l'hydroxyde de magnésium (ou le minerai brucite), l'hydromagnésite, la huntite, la boehmite et la bauxite pour promouvoir la formation d'un résidu charbonneux cohérent.

8. Procédé d'amélioration des propriétés de promotion de résidu charbonneux d'une composition polymère, ledit procédé comprenant les étapes de combinaison d'un polymère et d'une combinaison synergique d'additifs ignifuges qui comprend une nano-argile, la nano-argile étant le produit de réaction d'une argile de type smectite et d'un mélange d'un composé d'ammonium quaternaire et d'un agent de transfert de chaîne; et une seconde charge; le polymère étant choisi dans le groupe consistant en polyéthylène, copolymère d'éthylène, polypropylène, copolymère de propylène, et leurs combinaisons; et dans laquelle la seconde charge comprend au moins l'un parmi le trihydroxyde d'aluminium, le carbonate de magnésium, l'hydroxyde de magnésium (ou le minerai brucite), l'hydromagnésite, la huntite, la boehmite et la bauxite.
